# EUROPEAN PATENT APPLICATION

(11) **EP 4 797 397 A1**
(43) Date of publication of application: **26.08.2026**
(21) Application number: 26150273.6
(22) Date of filing: 05.01.2026
(51) Int. Cl.: H01M 50/15, H01M 50/169, H01M 50/184, H01M 50/188, H01M 50/553

(54) **SECONDARY BATTERY, SECONDARY BATTERY MANUFACTURING METHOD AND BATTERY MODULE**

(30) Priority: 25.02.2025 KR 20250024318
(71) Applicant: SAMSUNG SDI CO., LTD., Yongin-si, Gyeonggi-do 17084 (KR)
(72) Inventor: SONG, Young Jin, 16678 Suwon-si (KR); YONG, Jun Sun, 16678 Suwon-si (KR); BAE, Kwang Soo, 16678 Suwon-si (KR); LEE, Jun Hyung, 16678 Suwon-si (KR); KIM, Ji Hwan, 16678 Suwon-si (KR); LEE, Jung Woo, 16678 Suwon-si (KR)
(74) Representative: Marks & Clerk LLP

(57) **Abstract**

1. A secondary battery, comprising:

a case;

an electrode assembly accommodated in the case;

a cap plate (300) welded to the case, the cap plate having a welded portion (300a) and a pair of terminals (400), each terminal having a polarity different from the other terminal; and

a gasket (500) between the cap plate and each terminal,

wherein the pair of terminals includes

a first terminal portion (410) connected to the electrode assembly and

a second terminal portion (420) extending from the first terminal portion, the second terminal portion being between the welded portion and the first terminal portion.

## Description

### BACKGROUND

### 1. Field

The present disclosure relates to a secondary battery, a secondary battery manufacturing method, and a battery module.

### 2. Description of the Related Art

Generally, in recent years, with the rapid spread of electronic devices that use batteries, such as mobile phones, laptop computers, and electric vehicles, the demand for rechargeable batteries with high energy density and high capacity has rapidly increased. Accordingly, research and development for improving performance of rechargeable lithium batteries are actively underway.

A rechargeable lithium battery is a battery including a positive electrode and a negative electrode including an active material which allows for intercalation and deintercalation of lithium ions and an electrolyte, and produces electrical energy through an oxidation-reduction reaction taking place when the lithium ions are intercalated and deintercalated to and from the positive electrode and the negative electrode.

The above-described information disclosed in the background technology of the present disclosure is only for improving understanding of the background of the present disclosure, and accordingly, can include information that does not constitute the related art.

### SUMMARY

Embodiments include a secondary battery, including a case, an electrode assembly accommodated in the case, a cap plate welded to the case, (the cap plate) having a welded portion (formed thereon) and a pair of terminals having different polarities (or each terminal having a polarity different from the other terminal) (provided thereon), and a gasket (disposed)between the cap plate and each (of the pair of) terminal(s), wherein the (pair of) terminals include(s) a first terminal portion connected to the electrode assembly and a second terminal portion extending from the first terminal portion, the second terminal portion being (disposed) between the welded portion and the first terminal portion.

The second terminal portion may include a first terminal surface facing the cap plate, a second terminal surface (disposed) in a direction opposite to the first terminal surface, and a third terminal surface connecting the first terminal surface and the second terminal surface, the third terminal surface intersecting (or disposed to intersect) the first terminal surface and the second terminal surface.

A terminal groove portion may be (formed to be) recessed toward the second terminal surface to surround the gasket, the terminal groove portion being in the first terminal surface.

A width of the first terminal surface excluding a width of the terminal groove portion may range from 0.7 mm to 0.9 mm.

A depth of the terminal groove portion may range from 0.7 mm to 0.9 mm.

The first terminal surface and the third terminal surface may be in (or come into) contact with the gasket, and the second terminal surface may not be in (or come into) contact with the gasket.

The (pair of) terminals may further include a connecting portion connecting the first terminal portion and the second terminal portion.

An inclined surface may be in (or come into) contact with the gasket (and disposed to be inclined) at a predetermined angle and may be (provided) on the connecting portion.

A stepped surface may be in (or come into) contact with the gasket, the stepped surface being (provided) on the connecting portion.

The stepped surface may include a first stepped surface connected to the first terminal portion, and a second stepped surface connected to the second terminal portion, the second stepped surface intersecting (or disposed to intersect) the first stepped surface.

The cap plate may include a first plate surface facing the electrode assembly, a second plate surface (disposed) in a direction opposite to the first plate surface, and a plate groove portion is (formed to be) recessed in the first plate surface to surround the gasket.

The cap plate may further include a plate protrusion protruding from the second plate surface, the plate protrusion having at least a portion thereof in (or coming into) contact with the gasket.

The gasket may include a gasket body portion passing through the cap plate, a first gasket extension extending from the gasket body portion, the first gasket extension facing (or disposed to face) the first plate surface, a second gasket extension extending from the gasket body portion, the second gasket extension facing (or disposed to face) the plate protrusion, and a third gasket extension extending from the second gasket extension, the third gasket extension facing (or disposed to face) the second terminal portion.

The third gasket extension may not be in (or come into) contact with the plate protrusion.

A separation distance between the welded portion and the third gasket extension may be larger than a thickness of (each of) the (pair of) terminals.

A separation distance between the welded portion and the third gasket extension ranges from 2.5 mm to 4 mm.

A ratio of a separation distance between the welded portion and the third gasket extension relative to a width of the cap plate may range from 8.9 to 16.1.

A width of the third gasket extension ranges from 0.7 mm to 0.9 mm.

Embodiments include a secondary battery manufacturing method, including placing a cap plate and (a pair of) terminals between a first mold and a second mold, forming a cavity by moving the first mold toward the second mold, and forming a gasket by injecting resin into the cavity.

Embodiments include a battery module, including a housing, and a plurality of secondary batteries, in accordance with the embodiments discussed above, accommodated (or disposed) inside the housing.

Embodiments include a battery module, including a housing, and a plurality of secondary batteries accommodated (or disposed) inside the housing, wherein each of the plurality of secondary batteries includes a case, an electrode assembly accommodated in the case, a cap plate welded to the case, the cap plate having a welded portion thereon and a pair of terminals having different polarities provided thereon, and a gasket between the cap plate and the terminals, wherein the pair of terminals include a first terminal portion connected to the electrode assembly and a second terminal portion extending from the first terminal portion, the second terminal portion being between the welded portion and the first terminal portion.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a perspective view schematically illustrating a configuration of a battery module according to one or more embodiments of the present disclosure;
FIG. 2 is a perspective view schematically illustrating a configuration of a secondary battery according to one or more embodiments of the present disclosure;
FIG. 3 is an exploded perspective view schematically illustrating the configuration of the secondary battery according to one or more embodiments of the present disclosure;
FIG. 4 is a view schematically illustrating a configuration of an electrode assembly according to one or more embodiments of the present disclosure;
FIG. 5 is a partial cross-sectional view schematically illustrating the configuration of a portion of the secondary battery according to one or more embodiments of the present disclosure;
FIG. 6 is an enlarged view of a portion of FIG. 5;
FIG. 7 is a partial cross-sectional view schematically illustrating a configuration of a portion of a secondary battery according to another embodiment of the present disclosure;
FIG. 8 is an enlarged view of a portion of FIG. 7;
FIG. 9 is a flowchart schematically illustrating a secondary battery manufacturing method according to one or more embodiments of the present disclosure; and
FIGS. 10 to 13 are views schematically illustrating a secondary battery manufacturing process according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way. Accordingly, since the embodiments disclosed in the present specification and configurations shown in the drawings are only some of the most preferable embodiments of the present disclosure and do not represent the entire scope of the present disclosure, it should be understood that there are various equivalents and modifications which may replace them at the time of filing the present application, provided they fall within the scope of the claims.

Further, when used in the present specification, "comprise," "include," "comprising," and/or "including" specify the presence of mentioned shapes, numbers, steps, operations, members, elements and/or groups thereof, and do not exclude the presence or addition of one or more other shapes, numbers, steps, operations, members, elements and/or groups thereof.

Further, in order to help understanding of the present disclosure, the accompanying drawings are not drawn to actual scale and the sizes of some components may be exaggerated. In addition, the same reference numerals may be given to the same components in different embodiments.

The mention that two objects to be compared are 'the same' means that that the two objects are 'substantially the same.' Accordingly, 'substantially the same' may include a deviation considered as a low level in the art, for example, a deviation within 5%. Further, uniformity of a parameter in a certain region may mean uniformity from an average point of view.

Although first, second, and the like are used to describe various components, it goes without saying that these components are not limited by these terms. These terms are only used to distinguish one component from another component, and unless otherwise stated, it goes without saying that the first component may be the second component.

Throughout the specification, unless otherwise stated, each component may be singular or plural.

The placement of an arbitrary component on the "upper portion (or lower portion)" of a component or "above (or below)" of a component may mean not only that the arbitrary component is in contact with an upper surface (or a lower surface) of the component, but also that another component may be interposed between the component and the arbitrary component above (or below) the component.

Further, when it is disclosed that a certain component is "on," "connected to," or "coupled to" another component, it should be understood that the components may be directly connected or coupled to each other, but another component may be "interposed" between the components, or the components may be "connected," "coupled," or "linked" through another component.

As used in the present specification, the term "and/or" includes any one or more and all combinations of the related listed items. Further, when embodiments of the present disclosure are described, the use of "may" relates to "one or more embodiments of the present disclosure." The term such as "one or more" before a list of elements modifies an entire list of the elements and does not modify individual elements in the list.

Throughout the specification, "A and/or B" means to A, B, or A and B unless otherwise stated, and "C to D" means greater than or equal to C and less than or equal to D unless otherwise specified.

When phrases such as "at least one of A, B, and C," "at least one of A, B, or C," "at least one selected from group A, B, and C," or "at least one selected from A, B, and C" are used to specify a list of elements A, B, and C, the phrases may refer to any one of all suitable combinations.

The term "use" may be considered to be synonymous with the term "utilize." As used in the present specification, the terms "substantially," "about," and other similar terms are used as terms of approximation rather than terms of degrees, and are intended to consider an inherent variation in measured or calculated values to be recognized by those skilled in the art.

Although the terms "first," "second," "third," and the like may be used in the present specification to describe various elements, components, regions, layers and/or sections, these elements, components, regions, layers and/or sections should not be limited by these terms. These terms are used only to distinguish one element, component, region, drawing layer, or section from another element, component, region, drawing layer, or section. Accordingly, a first element, component, region, layer, or section to be described below may be referred to a second element, component, region, layer, or section without departing from the teachings of the present disclosure.

Spatially related terms such as "beneath," "below," "lower," "above," and "upper" are used for easy description of the relationship of one element or feature to another element or feature shown in the drawings. These spatially related terms are provided for easy understanding of the present disclosure according to various process states or usage states of the present disclosure, and are not intended to limit the present disclosure. For example, when the elements or features in the drawings are reversed, an element described as "lower" or "below" "becomes "upper" or "above." Accordingly, "below" is a concept encompassing "above" or "below."

The terms used in the present specification is intended to describe the embodiments of the present disclosure, and is not intended to limit the present disclosure.

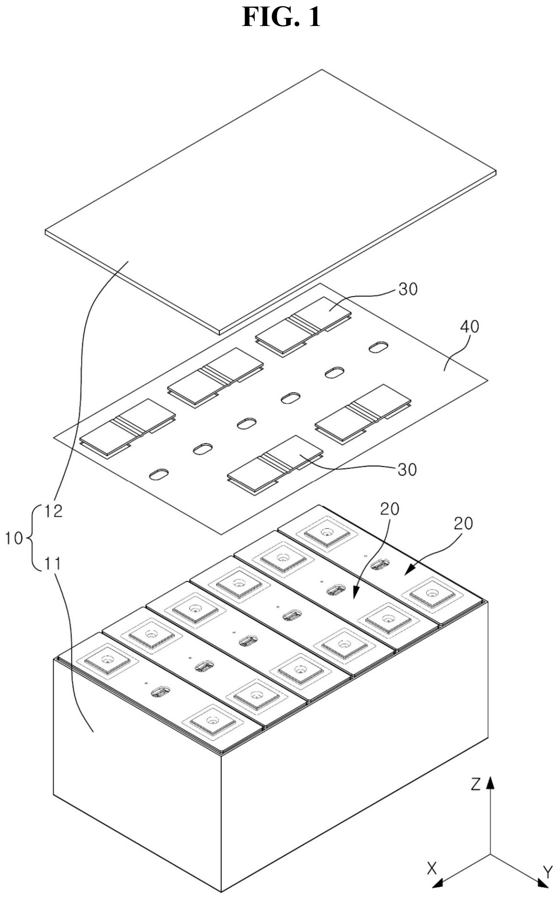

FIG. 1 is a perspective view schematically illustrating a configuration of a battery module according to one or more embodiments of the present disclosure.

Referring to FIG. 1, a battery module according to the present embodiment may include a housing 10, a secondary battery 20, and a busbar 30.

The housing 10 forms a schematic exterior of the battery module and may have a space in which the secondary battery 20 can be accommodated therein. The housing 10 may include a housing body 11 and a housing cover 12.

The housing body 11 may be formed to have the form of a box that is hollow and has one open side. However, a cross-sectional shape of the housing body 11 may be changed to various shapes such as a polygonal shape, a circular shape, and an elliptical shape.

The housing cover 12 may be coupled to the housing body 11 and may close the space inside the housing body 11. For example, the housing cover 12 may be formed to have a substantially plate-like form and may face the open side of the housing body 11.

The housing cover 12 may be fixed to the housing body 11 using various types of coupling methods such as bolting, welding, and fitting.

The secondary battery 20 may serve as a unit structure that stores and supplies power in the battery module. The secondary battery 20 may be accommodated inside the housing 10.

The secondary battery 20 may be provided as a plurality of secondary batteries 20. The plurality of secondary batteries 20 may be arranged in one or more columns in at least any one of a longitudinal direction of the housing 10 (the X-axis direction based on FIG. 1) or a width direction of the housing 10 (the Y-axis direction based on FIG. 1).

Although FIG. 1 shows an example in which the plurality of secondary batteries 20 number six in a single column in the longitudinal direction of the housing 10, the arrangement of the plurality of secondary batteries 20 may vary.

The plurality of secondary batteries 20 may be parallel to each other. The number of secondary batteries 20 may vary according to the size, shape, etc., of the housing 10.

The plurality of secondary batteries 20 may be electrically connected by the busbar 30.

The busbar 30 according to the present embodiment may be between the housing cover 12 and the secondary batteries 20.

The busbar 30 may be provided as a plurality of busbars 30. Each busbar 30 may connect a pair of secondary batteries 20 neighboring each other either in series or in parallel configuration.

The busbars 30 may be formed of an electrically conductible material such as, for example, copper, aluminum, or nickel. A specific shape of the busbars 30 may be changed to various other shapes that allow the busbars 30 to electrically connect the secondary batteries 20 neighboring each other.

The plurality of busbars 30 may be supported by a busbar holder 40 inside the housing 10.

The busbar holder 40 according to the present embodiment may be formed to have the form of, for example, a flat plate. The busbar holder 40 may be between the housing cover 12 and the secondary batteries 20.

The busbars 30 may be fixed to the busbar holder 40 using various types of coupling methods such as, for example, fitting, bolting, and injection joining. The busbar holder 40 may be configured to include a polymer compound material that may be electrically insulating.

The secondary battery 20 according to various embodiments of the present disclosure will be described below.

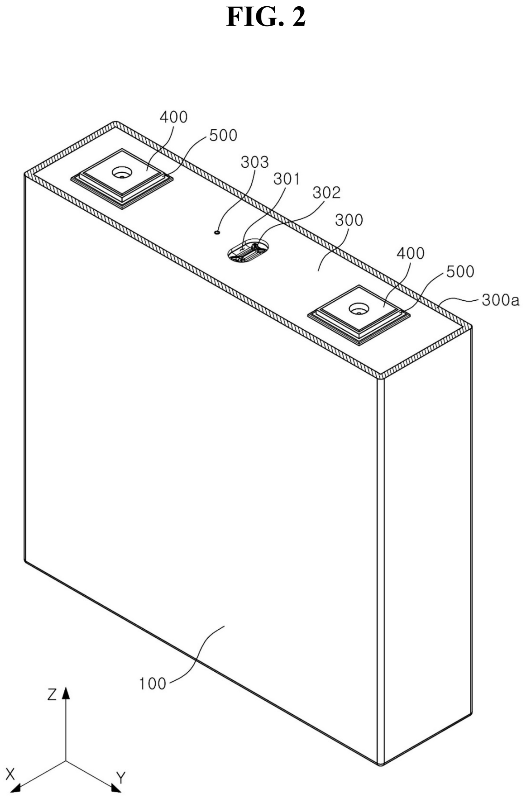

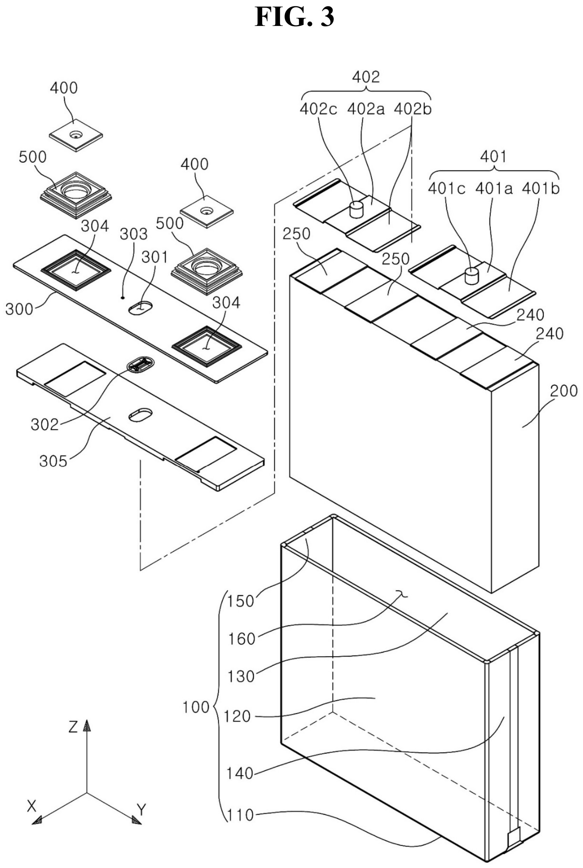

FIG. 2 is a perspective view schematically illustrating a configuration of a secondary battery according to one or more embodiments of the present disclosure, and FIG. 3 is an exploded perspective view schematically illustrating the configuration of the secondary battery according to one or more embodiments of the present disclosure.

An example in which the secondary battery 20 is a lithium-ion secondary battery 20 and is a prismatic battery will be described below. However, the secondary battery 20 may be a lithium polymer battery or be of a different configuration, such as a cylindrical battery, without limitation.

Referring to FIGS. 1 to 3, the secondary batteries 20 according to the present embodiment may each include a case 100, an electrode assembly 200, a cap plate 300, a terminal 400, and a gasket 500.

The case 100 may form a schematic exterior of the secondary battery 20 and may accommodate the electrode assembly 200. The case 100 may include a bottom portion 110, a front portion 120, a rear portion 130, a first side portion 140, and a second side portion 150.

The bottom portion 110 may form an exterior of a lower side of the case 100 (as shown in FIG. 3). The bottom portion 110 according to the present embodiment may have the form of a rectangular plate. The bottom portion 110 may be seated on a bottom surface of the housing body 11.

The front portion 120, the rear portion 130, the first side portion 140, and the second side portion 150 may form an exterior of peripheral surfaces of the case 100.

The front portion 120, the rear portion 130, the first side portion 140, and the second side portion 150 may each have the form of a plate that extends upward from an edge of the bottom portion 110 (based on FIG. 3).

The front portion 120, the rear portion 130, the first side portion 140, and the second side portion 150 may surround a space at an upper side of the bottom portion 110. The front portion 120, the rear portion 130, the first side portion 140, and the second side portion 150 may constitute a rectangular cross-sectional shape.

The front portion 120 and the rear portion 130 may face each other in the longitudinal direction of the housing 10 (the X-axis direction based on FIG. 1). The front portion 120 and the rear portion 130 may be parallel to each other. Areas of the front portion 120 and the rear portion 130 may be equal to each other.

The first side portion 140 and the second side portion 150 may face each other in the width direction of the housing 10 (the Y-axis direction based on FIG. 1). The first side portion 140 and the second side portion 150 may be parallel to each other.

Areas of the first side portion 140 and the second side portion 150 may be equal to each other. The area of each of the first side portion 140 and the second side portion 150 may be smaller than the area of each of the front portion 120 and the rear portion 130.

The case 100 may further include an open portion 160. The open portion 160 may be a space surrounded by upper ends of the front portion 120, the rear portion 130, the first side portion 140, and the second side portion 150. The open portion 160 may connect an inner space and an outer space of the case 100 to each other.

As such, the case 100 according to the present embodiment may have a rectangular parallelepiped form with an open upper side (as shown in FIG. 3).

A first direction mentioned below may be a direction that is parallel to the Z-axis (as shown in FIGS. 2 and 3) and heads from the bottom portion 110 toward the open portion 160. A second direction may be a direction that is parallel to the Y-axis (as shown in FIGS. 2 and 3) and heads from the second side portion 150 toward the first side portion 140. A third direction may be a direction that is parallel to the X-axis (as shown in FIGS. 2 and 3) and heads from the rear portion 130 toward the front portion 120.

The electrode assembly 200 may serve as a unit structure that performs power charging and discharging operations in the secondary battery 20. The electrode assembly 200 may be accommodated inside the case 100.

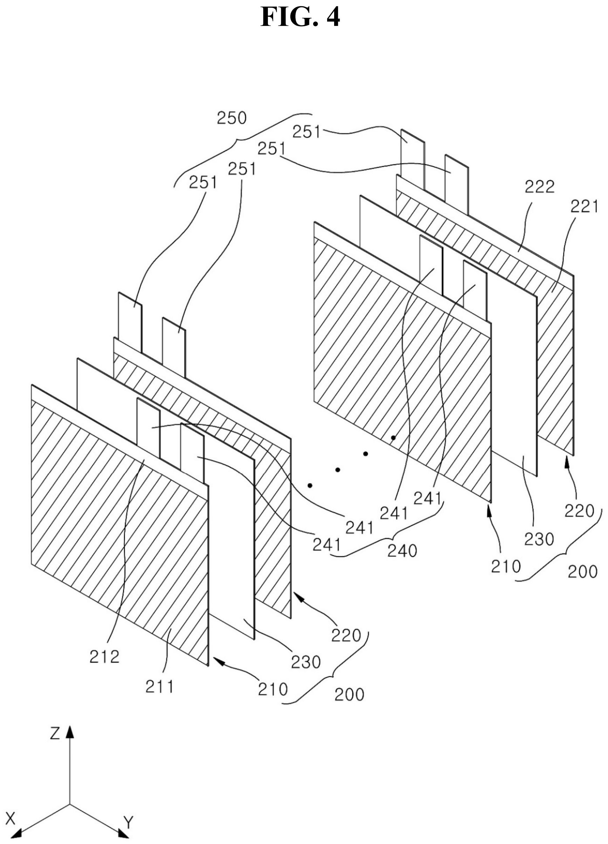

FIG. 4 is a view schematically illustrating a configuration of an electrode assembly according to one or more embodiments of the present disclosure.

Referring to FIGS. 1 to 4, the electrode assembly 200 according to the present embodiment may include a first electrode 210, a second electrode 220, and a separator 230 between the first electrode 210 and the second electrode 220. The first electrode 210, the separator 230, and the second electrode 220 may be provided as a plurality of first electrodes 210, a plurality of separators 230, and a plurality of second electrodes 220, respectively.

An example in which the electrode assembly 200 has a stack form in which the plurality of first electrodes 210, the plurality of separators 230, and the plurality of second electrodes 220 are sequentially stacked in the third direction will be described below. The electrode assembly 200, however, may also be formed to have a form in which the first electrode 210, the separator 230, and the second electrode 220, which are stacked, are wound clockwise or counterclockwise about a winding axis.

The first electrode 210 may serve as any one of a positive electrode or a negative electrode of the electrode assembly 200. An example in which the first electrode 210 is a positive electrode of the electrode assembly 200 will be described below. However, the first electrode 210 may also serve as a negative electrode of the electrode assembly 200.

The first electrode 210 according to the present embodiment may be formed to have the form of foil including a metal material such as aluminum or an aluminum alloy.

The type, size, shape, and the like of the first electrode 210 may vary, as long as the first electrode 210 does not cause chemical changes to the secondary battery 20 and has electrical conductivity.

A cross-sectional shape of the first electrode 210 may be changed to various shapes other than a rectangular shape shown in FIG. 4.

The first electrode 210 may be provided as a plurality of first electrodes 210. The plurality of first electrodes 210 may be arranged in the third direction between the front portion 120 and the rear portion 130 of the case 100. The number of first electrodes 210 may vary according to the charging capacity or the like of the secondary battery 20.

A first active material layer 211 may be applied on at least a portion of the first electrode 210. The first active material layer 211 may be applied on both surfaces of the first electrode 210, or may be applied on only one surface of the first electrode 210.

In the present embodiment, as the first electrode 210 serves as a positive electrode, the first active material layer 211 may include a positive electrode active material.

The positive electrode active material may be a compound capable of reversible intercalation and deintercalation of lithium (a lithiated intercalation compound). More specifically, one or more composite oxides of lithium and a metal selected from cobalt, manganese, nickel, iron, and combinations thereof may be used.

For example, the positive electrode active material may include at least any one of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM). Here, 0<x<1, 0<y<1, 0<z<1, and x+y+z=1 may be satisfied.

The positive electrode active material may include only any one of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM) or may include any two or all of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM).

The first active material layer 211 may further include a positive electrode conductive additive.

The positive electrode conductive additive is used to impart conductivity to the first active material layer 211, and any electrically conductive material that does not cause chemical changes may be used as the positive electrode conductive additive.

Examples of the positive electrode conductive additive may include carbon materials such as natural graphite, artificial graphite, carbon black, acetylene black, ketjen black, carbon fibers, carbon nanofibers, and carbon nanotubes, metal materials in the form of a metal powder or metal fibers and containing copper, nickel, aluminum, silver, and the like, conductive polymers such as polyphenylene derivatives, or a mixture thereof.

The first active material layer 211 may further include a positive electrode binder.

The positive electrode binder serves to ensure that particles constituting the positive electrode active material are well adhered to each other and the positive electrode active material is well adhered to the first electrode 210.

As the positive electrode binder, a nonaqueous binder, an aqueous binder, a dry binder, or a combination thereof may be used.

Examples of the nonaqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, and a combination thereof.

When the aqueous binder is used as the positive electrode binder, a cellulose compound that can impart viscosity may be further included. As the cellulose compound, carboxymethyl cellulose, hydroxypropyl methyl cellulose, methyl cellulose, alkali metal salts thereof, or a mixture of one or more thereof may be used. Na, K, or Li may be used as the alkali metal.

The dry binder may be a polymer material that can be formed into fibers such as, for example, polytetrafluoroethylene, polyvinylidene fluoride, a polyvinylidene fluoride-hexafluoropropylene copolymer, polyethylene oxide, or a combination thereof.

The first electrode 210 may include a first plain portion 212 on which the first active material layer 211 is not applied.

The first plain portion 212 according to the present embodiment may be in an upper end region of the first electrode 210 that is positioned toward the open portion 160 inside the case 100. However, the first plain portion 212 may also be formed across the entire edge region of the first electrode 210.

The second electrode 220 may serve as the other of a positive electrode or a negative electrode of the electrode assembly 200. An example in which the second electrode 220 is a negative electrode of the electrode assembly 200 will be described below. However, the second electrode 220 may also serve as a positive electrode of the electrode assembly 200.

The second electrode 220 may be provided as a plurality of second electrodes 220. The plurality of second electrodes 220 may be arranged in the third direction between the front portion 120 and the rear portion 130 of the case 100.

The placement of the first electrodes 210 and the second electrodes 220 may alternate in the third direction. The second electrodes 220 may be spaced at predetermined intervals from the first electrodes 210 in the third direction.

The second electrode 220 according to the present embodiment may be formed to have the form of, for example, a foil including a metal material such as copper, a copper alloy, nickel, or a nickel alloy.

The type, size, shape, and the like of the second electrode 220 may vary, as long as the second electrode 220 does not cause chemical changes to the secondary battery 20 and has conductivity.

A cross-sectional shape of the second electrode 220 may be changed to various shapes other than a rectangular shape shown in FIG. 4.

A second active material layer 221 may be applied on at least a portion of the second electrode 220. The second active material layer 221 may be applied on both surfaces of the second electrode 220, or may be applied on only one surface of the second electrode 220.

As the second electrode 220 serves as a negative electrode, the second active material layer 221 may include a negative electrode active material.

The negative electrode active material may include a material capable of reversible intercalation/deintercalation of lithium ions, lithium metal, a lithium metal alloy, a material capable of doping and dedoping lithium, or a transition metal oxide.

The material capable of reversible intercalation/deintercalation of lithium ions is a carbon negative electrode active material, and may include, for example, crystalline carbon, amorphous carbon, or a combination thereof.

Examples of the crystalline carbon may include graphite such as natural graphite or artificial graphite that is irregularly shaped, plate-shaped, flake-shaped, spherical, or fibrous, and examples of the amorphous carbon may include soft carbon, hard carbon, mesophase pitch carbide, and calcinated coke.

An alloy of the lithium metal may include lithium metal and a metal selected from Na, K, Rb, Cs, Fr, Be, Mg, Ca, Sr, Si, Sb, Pb, In, Zn, Ba, Ra, Ge, Al, and Sn.

A Si negative electrode active material or a Sn negative electrode active material may be used as the material capable of doping and dedoping lithium. The Si negative electrode active material may be silicon, a silicon-carbon composite, SiOx (0 < x < 2), a Si-Q alloy (where Q is selected from alkali metals, alkali earth metals, Group 13 elements, Group 14 elements (excluding Si), Group 15 elements, Group 16 elements, transition metals, rare earth elements, and combinations thereof), or a combination thereof. The Sn negative electrode active material may be Sn, SnO₂, a Sn alloy, or a combination thereof.

The silicon-carbon composite may be a composite of silicon and amorphous carbon. The silicon-carbon composite may have a form including a silicon particle and amorphous carbon coated on a surface of the silicon particle. For example, the silicon-carbon composite may include a secondary particle (core) in which silicon primary particles are assembled and an amorphous carbon coating layer (shell) located on a surface of the secondary particle.

The amorphous carbon may also be located between the silicon primary particles. For example, the silicon primary particles may be coated with amorphous carbon. The secondary particle may be dispersed in an amorphous carbon matrix.

The silicon-carbon composite may further include crystalline carbon. For example, the silicon-carbon composite may include a core including crystalline carbon and a silicon particle and an amorphous carbon coating layer located on a surface of the core.

The Si negative electrode active material or Sn negative electrode active material may be used by being mixed with a carbon negative electrode active material.

The second active material layer 221 may further include a negative electrode conductive additive and a negative electrode binder.

The negative electrode conductive additive is used to impart conductivity to the second active material layer 221, and any electrically conductive material that does not cause chemical changes may be used as the negative electrode conductive additive.

Examples of the negative electrode conductive additive may include carbon materials such as natural graphite, artificial graphite, carbon black, acetylene black, ketjen black, carbon fibers, carbon nanofibers, and carbon nanotubes, metal materials in the form of a metal powder or metal fibers and containing copper, nickel, aluminum, silver, and the like, conductive polymers such as polyphenylene derivatives, or a mixture thereof.

The negative electrode binder serves to ensure that particles constituting the negative electrode active material are well adhered to each other and the negative electrode active material is well adhered to the second electrode 220.

As the negative electrode binder, a nonaqueous binder, an aqueous binder, a dry binder, or a combination thereof may be used.

Examples of the nonaqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, and a combination thereof.

When the aqueous binder is used as the negative electrode binder, a cellulose compound that can impart viscosity may be further included. As the cellulose compound, carboxymethyl cellulose, hydroxypropyl methyl cellulose, methyl cellulose, alkali metal salts thereof, or a mixture of one or more thereof may be used. Na, K, or Li may be used as the alkali metal.

The dry binder may be a polymer material that can be formed into fibers and may be, for example, polytetrafluoroethylene, polyvinylidene fluoride, a polyvinylidene fluoride-hexafluoropropylene copolymer, polyethylene oxide, or a combination thereof.

The second electrode 220 may include a second plain portion 222 on which the second active material layer 221 is not applied.

The second plain portion 222 according to the present embodiment may be in an upper end region of the second electrode 220 toward the open portion 160 inside the case 100. However, the second plain portion 222 may also be formed across the entire edge region of the second electrode 220.

The separator 230 may be between the first electrode 210 and the second electrode 220. The separator 230 may perform a function of preventing a short circuit between the first electrode 210 and the second electrode 220 while allowing movement of lithium ions between the first electrode 210 and the second electrode 220.

The separator 230 may entirely surround a surface region of the electrode assembly 200. Accordingly, the separator 230 may prevent the first electrode 210 and the second electrode 220 from being directly exposed to the outside of the electrode assembly 200.

Polyethylene, polypropylene, polyvinylidene fluoride, or a multi-layer film of two or more thereof may be used as the separator 230, or a mixed multi-layer film such as a polyethylene/polypropylene double-layer separator, a polyethylene/polypropylene/polyethylene triple-layer separator, and a polypropylene/polyethylene/polypropylene triple-layer separator may also be used as the separator 230.

The separator 230 may include a porous base and a coating layer located on one surface or both surfaces of the porous base and including an organic material, an inorganic material, or a combination thereof.

The porous base may be a polymer membrane formed of any one polymer of a polyolefin such as polyethylene or polypropylene, a polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride polymer or a (meth)acryl polymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but this may vary.

The organic material and inorganic material may be present by being mixed in a single coating layer or may be present in a form in which a coating layer including the organic material and a coating layer including the inorganic material are stacked.

The electrode assembly 200 according to the present embodiment may further include a first electrode tab 240 and a second electrode tab 250.

The first electrode tab 240 may be connected to the first electrode 210 and may protrude to the outside of the electrode assembly 200. As the first electrode 210 serves as a positive electrode, the first electrode tab 240 may serve as a positive electrode tab of the secondary battery 20. However, when the first electrode 210 is a negative electrode, the first electrode tab 240 may serve as a negative electrode tab of the secondary battery 20.

The first electrode tab 240 according to the present embodiment may extend from the electrode assembly 200 in the first direction. For example, the first electrode tab 240 may extend toward the open portion 160 inside the case 100.

The first electrode tab 240 according to the present embodiment may be provided as a plurality of first electrode tabs 240. The plurality of first electrode tabs 240 may be spaced in the second direction. Although an example in which two first electrode tabs 240 are formed is shown in FIG. 3, the number of first electrode tabs 240 may be changed to various other numbers such as three or four.

The first electrode tab 240 may include a first tab member 241.

The first tab member 241 according to the present embodiment may have the form of foil that extends from the first plain portion 212 of the first electrode 210 in the first direction.

The first tab member 241 may have a substantially rectangular shape. However, the shape of the first tab member 241 may be changed to various other shapes.

The first tab member 241 may be integrally formed with the first electrode 210. For example, the first tab member 241 may be a region of the first plain portion 212 that remains after a partial region of the first plain portion 212 is cut or removed by a notching process or the like. In one or more other embodiments, the first tab member 241 may be manufactured separately from the first electrode 210 and connected to the first plain portion 212 by welding or the like. A material of the first tab member 241 may be the same as a material of the first electrode 210.

The first tab member 241 may be provided as a plurality of first tab members 241. The number of first tab members 241 may be equal to the number of first electrodes 210. Each first tab member 241 may individually extend from the first plain portion 212 of a different first electrode 210.

The first tab members 241 neighboring each other may face each other in the third direction. The first tab members 241 neighboring each other may be parallel to each other.

Accordingly, the first electrode tab 240 according to the present embodiment may be an assembly of the plurality of first tab members 241 stacked in the third direction. The first tab members 241 neighboring each other may come into contact with each other or may be spaced a thickness of the separator 230 from each other.

The second electrode tab 250 may be connected to the second electrode 220 and may protrude to the outside of the electrode assembly 200. As the second electrode 220 serves as a negative electrode, the second electrode tab 250 may serve as a negative electrode tab of the secondary battery 20. However, when the second electrode 220 is a positive electrode, the second electrode tab 250 may serve as a positive electrode tab of the secondary battery 20.

The second electrode tab 250 according to the present embodiment may extend from the electrode assembly 200 in the first direction. That is, the second electrode tab 250 may extend toward the open portion 160 inside the case 100.

The first electrode tab 240 and the second electrode tab 250 may spaced in the second direction. For example, the second electrode tab 250 may be spaced a predetermined distance from the first electrode tab 240 in the second direction.

The second electrode tab 250 according to the present embodiment may be provided as a plurality of second electrode tabs 250. The plurality of second electrode tabs 250 may be spaced in the second direction.

Although an example in which two second electrode tabs 250 are formed is shown in FIG. 3, the number of second electrode tabs 250 may be changed to various other numbers such as three or four.

The second electrode tab 250 may include a second tab member 251.

The second tab member 251 according to the present embodiment may have the form of foil that extends from the second plain portion 222 of the second electrode 220 in the first direction.

The second tab member 251 may have a substantially rectangular shape. However, the shape of the second tab member 251 may be changed to various other shapes.

The second tab member 251 may be integrally formed with the second electrode 220. For example, the second tab member 251 may be a region of the second plain portion 222 that remains after a partial region of the second plain portion 222 is cut or removed by a notching process or the like. In one or more other embodiments, the second tab member 251 may be manufactured separately from the second electrode 220 and then connected to the second plain portion 222 by welding or the like. A material of the second tab member 251 may be the same as a material of the second electrode 220.

The second tab member 251 may be provided as a plurality of second tab members 251. The number of second tab members 251 may be equal to the number of second electrodes 220. Each second tab member 251 may individually extend from the second plain portion 222 of a different second electrode 220.

The second tab members 251 neighboring each other may face each other in the third direction. The second tab members 251 neighboring each other may be parallel to each other.

Accordingly, the second electrode tab 250 according to the present embodiment may be an assembly of the plurality of second tab members 251 stacked in the third direction. The second tab members 251 neighboring each other may come into contact with each other or may be spaced the thickness of the separator 230 from each other.

The cap plate 300 may be coupled to the case 100 and may seal the case 100.

The cap plate 300 according to the present embodiment may be formed to have the form of a flat plate. The cap plate 300 may be at the open portion 160 of the case 100.

The cap plate 300 may face the electrode assembly 200 in the first direction. That is, the cap plate 300 may be spaced a predetermined distance from the electrode assembly 200 in the first direction. The cap plate 300 may be parallel to the bottom portion 110 of the case 100.

The cap plate 300 may be seated on an upper end of the case 100, more specifically, upper ends of the front portion 120, the rear portion 130, the first side portion 140, and the second side portion 150. The cap plate 300 may be coupled to the case 100 by welding.

An edge of the cap plate 300 and an upper end of the case 100 may be bonded to each other by laser welding. Therefore, a welded portion 300a may be formed on the cap plate 300. The welded portion 300a may be formed along the edge of the cap plate 300.

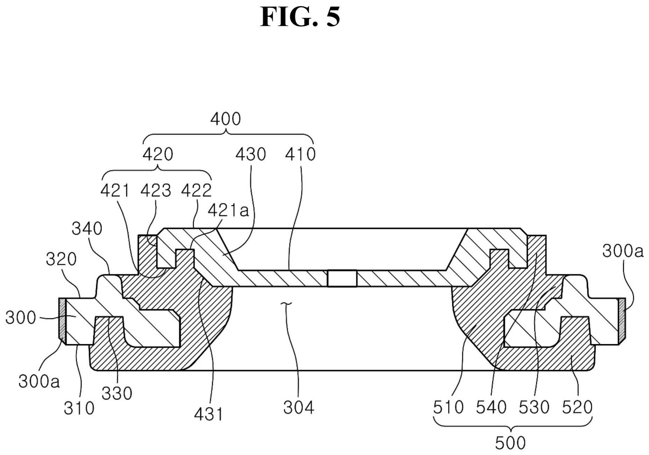

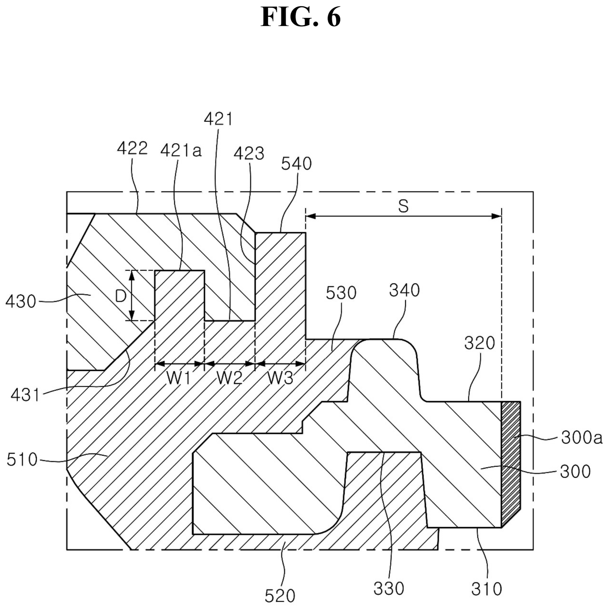

FIG. 5 is a partial cross-sectional view schematically illustrating the configuration of the secondary battery according to one or more embodiments of the present disclosure, and FIG. 6 is an enlarged view of FIG. 5.

Referring to FIGS. 1 to 6, the cap plate 300 according to the present embodiment may include a first plate surface 310, a second plate surface 320, a plate groove portion 330, and a plate protrusion 340.

The first plate surface 310 and the second plate surface 320 may be spaced in the first direction. The first plate surface 310 may be positioned toward the electrode assembly 200.

The first plate surface 310 may be a lower surface of the cap plate 300 that faces an upper surface of the electrode assembly 200 from which the first electrode tab 240 and the second electrode tab 250 protrude.

The second plate surface 320 may be positioned toward the space outside the case 100. The second plate surface 320 may be an upper surface of the cap plate 300 that is positioned in a direction opposite to the first plate surface 310.

The plate groove portion 330 may have the form of a groove that is formed to be recessed from the first plate surface 310 of the cap plate 300 toward the second plate surface 320 thereof. The plate groove portion 330 may surround a first gasket extension 520 of a gasket 500.

The plate protrusion 340 may have the form of a protrusion that protrudes from the second plate surface 320 of the cap plate 300 in the first direction. At least a portion of the plate protrusion 340 may come into contact with the gasket 500. The plate protrusion 340 may come into contact with a second gasket extension 530 of the gasket 500.

A vent hole 301 and a vent 302 may be provided in the cap plate 300 according to the present embodiment.

The vent hole 301 may be formed to have the form of a hole that vertically passes through the cap plate 300 in the first direction. The vent hole 301 may provide a path through which flame, gas, smoke, etc., formed inside the case 100 are discharged to the outside of the case 100 during thermal runaway of the secondary battery 20 caused by overcurrent or the like. A cross-sectional shape of the vent hole 301 may be changed to various shapes such as an elliptical shape, a circular shape, and a polygonal shape.

The vent 302 may be installed at the vent hole 301 and may be opened or closed in association with a change in an internal pressure of the case 100. That is, during a normal operation of the secondary battery 20, the vent 302 may close the vent hole 301 to block leakage of an electrolyte or the like inside the case 100 to the outside of the case 100 or introduction of moisture, foreign matter, or the like into the case 100.

During thermal runaway of the secondary battery 20, the vent 302 may open the vent hole 301 to induce discharge of the flame, gas, smoke, etc., formed inside the case 100 to the outside of the case 100.

The vent 302 may be formed to have a substantially plate-like form. The vent 302 may be fixed to the cap plate 300 using various types of coupling methods such as welding, bolting, and fitting.

The vent 302 may be inside the vent hole 301 or may face the vent hole 301 in the first direction at an upper side or a lower side of the cap plate 300.

A thickness of the vent 302 parallel to the first direction may be smaller than a thickness of the cap plate 300. Accordingly, the vent 302 may easily rupture or break when the internal pressure of the case 100 increases.

The vent 302 may include a notch formed to be concave toward an inner side of the vent 302 so that the vent 302 breaks first when the internal pressure of the case 100 increases.

An electrolyte inlet 303 formed to pass through the cap plate 300 and at which a sealing cap is able to be installed may be formed in the cap plate 300 according to the present embodiment.

The electrolyte inlet 303 may be spaced a predetermined distance from the vent hole 301 in the second direction or a direction opposite to the second direction.

A plate hole 304 may be formed in the cap plate 300 according to the present embodiment. The plate hole 304 may have the form of a hole that passes through the cap plate 300 in the first direction.

The plate hole 304 may be provided as a pair of plate holes 304. The pair of plate holes 304 may be spaced at a predetermined distance in the second direction. The vent hole 301 and the electrolyte inlet 303 may be between the pair of plate holes 304.

An insulating plate 305 may be between the cap plate 300 and the electrode assembly 200 according to the present embodiment. The insulating plate 305 may prevent direct contact between the cap plate 300 and the electrode assembly 200 and may insulate the cap plate 300 and the electrode assembly 200.

The insulating plate 305 may fix the position of the electrode assembly 200 inside the case 100. The insulating plate 305 may prevent damage to the electrode assembly 200 when the cap plate 300 is deformed toward an inner side of the case 100 due to external impact or the like.

The insulating plate 305 according to the present embodiment may face the electrode assembly 200 in the first direction inside the case 100. That is, the electrode assembly 200, the insulating plate 305, and the cap plate 300 may be sequential in the first direction.

The insulating plate 305 may be fixed to an inner side surface of the case 100 using various types of coupling methods such as fitting, welding, bolting, and adhering.

The insulating plate 305 may come into contact with one surface of the electrode assembly 200 from which the first electrode tab 240 and the second electrode tab 250 extend.

The insulating plate 305 may be made of an insulating material such as polyethylene (PE), polypropylene (PP), polyethylene terephthalate (PET), and rubber.

The terminal 400 may be provided on the cap plate 300 according to the present embodiment.

The terminal 400 may serve as a component that provides electrical connection of the secondary battery 20 to the busbar 30 or an external power device.

The terminal 400 according to the present embodiment may be formed of an electrically conductive material such as aluminum, nickel, and copper. The terminal 400 may protrude to the outside of the cap plate 300. For example, the terminal 400 may be at a position spaced a predetermined distance from the second plate surface 320 of the cap plate 300 in the first direction.

Although an example in which the terminal 400 has a quadrangular cross-sectional shape is shown in the drawings, the cross-sectional shape of the terminal 400 may be changed to various other shapes such as a circular shape, an elliptical shape, and a polygonal shape.

The terminal 400 according to the present embodiment may include a first terminal portion 410, a second terminal portion 420, and a connecting portion 430.

The first terminal portion 410 may be connected to the electrode assembly 200. A lower surface of the first terminal portion 410 may face the plate hole 304 formed to pass through the cap plate 300. A cross-sectional area of the first terminal portion 410 may be smaller than a cross-sectional area of the plate hole 304.

The second terminal portion 420 may extend from the first terminal portion 410. The second terminal portion 420 may protrude sideward from the first terminal portion 410. The second terminal portion 420 may be between the welded portion 300a and the first terminal portion 410. The second terminal portion 420 may be relatively more adjacent to the welded portion 300a than to the first terminal portion 410.

The busbar 30 may be seated on an upper surface of the second terminal portion 420. The busbar 30 and the second terminal portion 420 may be integrally bonded by laser welding or the like.

The second terminal portion 420 according to the present embodiment may include a first terminal surface 421, a second terminal surface 422, and a third terminal surface 423.

The first terminal surface 421 may be positioned toward the cap plate 300. The first terminal surface 421 may be a lower surface of the second terminal portion 420 that faces the second plate surface 320 of the cap plate 300. The first terminal surface 421 may come into contact with the gasket 500.

The second terminal surface 422 may be spaced from the first terminal surface 421 in the first direction. The second terminal surface 422 may be positioned toward the space outside the case 100. The second terminal surface 422 may be an upper surface of the second terminal portion 420 that is positioned in a direction opposite to the first terminal surface 421. The second terminal surface 422 may not come into contact with the gasket 500.

The third terminal surface 423 may connect the first terminal surface 421 and the second terminal surface 422. The third terminal surface 423 may be positioned in a direction in which the plate protrusion 340 of the cap plate 300 is located. The third terminal surface 423 may be an outer side surface of the second terminal portion 420 that intersects the first terminal surface 421 and the second terminal surface 422. The third terminal surface 423 may come into contact with the gasket 500.

A terminal groove portion 421a may be provided in the first terminal surface 421 according to the present embodiment. The terminal groove portion 421a may have the form of a groove that is formed to be recessed from the first terminal surface 421 toward the second terminal surface 422. The terminal groove portion 421a may surround the gasket 500. A portion of the gasket 500 may be accommodated in the terminal groove portion 421a.

A width W2 (see FIG. 6) of the first terminal surface 421 excluding a width W1 of the terminal groove portion 421a may range from 0.7 mm to 0.9 mm. A depth D of the terminal groove portion 421a may range from 0.7 mm to 0.9 mm.

By the configuration of the terminal groove portion 421a formed to be concave in the first terminal surface 421, a contact area with the gasket 500 can be increased, and thus a bonding strength of the gasket 500 during injection molding of the gasket 500 can be improved.

The connecting portion 430 may connect the first terminal portion 410 and the second terminal portion 420. The connecting portion 430 may be between the first terminal portion 410 and the second terminal portion 420 and may connect the first terminal portion 410 and the second terminal portion 420.

The connecting portion 430 may extend from an upper surface of the first terminal portion 410 in the first direction, and the second terminal portion 420 may extend from the connecting portion 430 in the direction in which the plate protrusion 340 of the cap plate 300 is located.

An inclined surface 431 may be provided on the connecting portion 430 according to the present embodiment. The inclined surface 431 may be provided on an outer side surface of the connecting portion 430 that comes into contact with the gasket 500. The inclined surface 431 may be connected to the terminal groove portion 421a. The inclined surface 431 may be formed to be inclined upward at a predetermined angle toward the terminal groove portion 421a. During the injection molding of the gasket 500, the inclined surface 431 may guide introduction of resin so that resin is introduced into the terminal groove portion 421a.

The terminal 400 according to the present embodiment may be provided as a pair of terminals 400. The pair of terminals 400 may be spaced at a predetermined distance in the second direction. The pair of terminals 400 may face each other in the second direction with the vent hole 301 therebetween.

Lower surfaces of the pair of terminals 400 may face different plate holes 304. The pair of terminals 400 may each face one of the first electrode tab 240 and the second electrode tab 250 in the first direction through a different plate hole 304.

The pair of terminals 400 may each be individually connected to one of the first electrode 210 and the second electrode 220 of the electrode assembly 200. Accordingly, the pair of terminals 400 may each serve as one of a positive electrode terminal and a negative electrode terminal of the secondary battery 20. For example, one of the pair of terminals 400 may be electrically connected to the first electrode 210 by a first connecting member 401 (see FIG. 3), and the other of the pair of terminals 400 may be electrically connected to the second electrode 220 by a second connecting member 402.

The first connecting member 401 may be between the electrode assembly 200 and the cap plate 300. The first connecting member 401 may connect the terminal 400 to face the first electrode tab 240 among the pair of terminals 400 to the first electrode tab 240.

The first connecting member 401 may be formed of an electrically conductive material. The first connecting member 401 may be formed of the same material as the terminal 400.

The first connecting member 401 according to the present embodiment may include a first current collecting plate 401a, a first tab connecting portion 401b, and a first terminal connecting portion 401c.

The first current collecting plate 401a may be between the first electrode tab 240 and the first plate surface 310 of the cap plate 300. A lower surface of the first current collecting plate 401a may be positioned in the first direction to face a space formed between a pair of first electrode tabs 240 adjacent in the second direction.

An upper surface of the first current collecting plate 401a may face any one terminal 400 of the pair of terminals 400 through the plate hole 304.

The first tab connecting portion 401b may extend from the first current collecting plate 401a and may be connected to the first electrode tab 240.

The first tab connecting portion 401b according to the present embodiment may be provided as a pair of first tab connecting portions 401b. The pair of first tab connecting portions 401b may extend in the second direction and the direction opposite to the second direction from both ends of the first current collecting plate 401a.

Each first tab connecting portion 401b may face a different first electrode tab 240 in the first direction. Each first tab connecting portion 401b may individually come into contact with an end surface of a different first electrode tab 240. The first electrode tab 240 and the first tab connecting portion 401b may be bonded to each other, e.g., by laser welding.

The first terminal connecting portion 401c may extend from the first current collecting plate 401a and may be connected to the terminal 400.

The first terminal connecting portion 401c according to the present embodiment may have the form of a column that extends in the first direction from an upper surface of the first current collecting plate 401a facing the plate hole 304. An upper end of the first terminal connecting portion 401c may pass through the plate hole 304 and may come into contact with a lower surface of the terminal facing the first electrode tab 240.

A cross-sectional shape of the first terminal connecting portion 401c may be changed to various other shapes such as an elliptical shape and a polygonal shape. The upper end of the first terminal connecting portion 401c may be bonded to the lower surface of the first terminal portion 410 by, for example, laser welding.

The second connecting member 402 may be between the electrode assembly 200 and the cap plate 300. The second connecting member 402 may connect the terminal 400 facing the second electrode tab 250 among the pair of terminals 400 to the second electrode tab 250.

The second connecting member 402 may be formed of an electrically conductible material. The second connecting member 402 may be formed of the same material as the terminal 400. The first connecting member 401 and the second connecting member 402 may be spaced at a predetermined distance (e.g., a predetermined distance from each other) in the second direction.

The second connecting member 402 according to the present embodiment may include a second current collecting plate 402a, a second tab connecting portion 402b, and a second terminal connecting portion 402c.

The second current collecting plate 402a may be between the second electrode tab 250 and the first plate surface of the cap plate 300. A lower surface of the second current collecting plate 402a may face in the first direction a space formed between a pair of second electrode tabs 250 that are adjacent in the second direction.

An upper surface of the second current collecting plate 402a may face the other of the terminal 400 of the pair of terminals 400 through the plate hole 304.

The second tab connecting portion 402b may extend (e.g., in the second direction) from the second current collecting plate 402a and may be connected to the second electrode tab 250.

The second tab connecting portion 402b according to the present embodiment may be provided as a pair of second tab connecting portions 402b. The pair of second tab connecting portions 402b may extend in the second direction and the direction opposite to the second direction from both ends (e.g., sides) of the second current collecting plate 402a.

Each second tab connecting portion 402b may face a different second electrode tab 250 in the first direction. Each second tab connecting portion 402b may individually come into contact with an end surface of a different second electrode tab 250. The second electrode tab 250 and the second tab connecting portion 402b may be bonded to each other by laser welding.

The second terminal connecting portion 402c may extend from the second current collecting plate 402a (e.g., in the first direction) and may be connected to the terminal 400.

The second terminal connecting portion 402c according to the present embodiment may have the form of a column that extends in the first direction from an upper surface of the second current collecting plate 402a facing the plate hole 304. An upper end of the second terminal connecting portion 402c may pass through the plate hole 304 and may come into contact with (e.g., may contact) a lower surface of the terminal 400 facing the second electrode tab 250.

A cross-sectional shape of the second terminal connecting portion 402c may be changed to various other shapes such as an elliptical shape and a polygonal shape. The upper end of the second terminal connecting portion 402c may be bonded to the lower surface of the first terminal portion 410 by laser welding.

The gasket 500 may be between the cap plate 300 and the terminal 400 according to the present embodiment.

The gasket 500 may serve as a component for electrically insulating the cap plate 300 and the terminal 400 from each other. The gasket 500 may be formed of an insulating material such as polyethylene (PE), polypropylene (PP), polyethylene terephthalate (PET), and rubber.

The gasket 500 may be provided as a pair of gaskets 500. Any one gasket 500 of the pair of gaskets 500 may be between the terminal 400 connected to the first connecting member 401 and the cap plate 300.

The other of the gasket 500 of the pair of gaskets 500 may be between the terminal 400 connected to the second connecting member 402 and the cap plate 300. The gasket 500 may be formed by injection molding.

The gasket 500 between the terminal 400 connected to the first connecting member 401 and the cap plate 300 among the pair of gaskets 500 will be described as an example below. The description of the gasket 500 given below may identically apply to the gasket 500 between the terminal 400 connected to the second connecting member 402 and the cap plate 300.

The gasket 500 according to the present embodiment may include a gasket body portion 510, the first gasket extension 520, the second gasket extension 530, and a third gasket extension 540.

The gasket body portion 510 may form an exterior of a central portion of the gasket 500 and may support the first gasket extension 520, the second gasket extension 530, and the third gasket extension 540.

The gasket body portion 510 according to the present embodiment may be between the terminal 400 and the electrode assembly 200. The gasket body portion 510 may pass through the cap plate 300 through the plate hole 304.

A central axis of the gasket body portion 510 may be coaxial with a central axis of the terminal 400. A hollow that passes through the gasket body portion 510 in the first direction may be formed in a central portion of the gasket body portion 510. Accordingly, the first terminal connecting portion 401c of the first connecting member 401 and the second terminal connecting portion 402c of the second connecting member 402 may come into contact with the lower surface of the first terminal portion 410 through the hollow of the gasket body portion 510.

An outer peripheral surface of the gasket body portion 510 may come into close contact with an inner peripheral surface of the cap plate 300 that surrounds the plate hole 304.

The first gasket extension 520 may extend from the gasket body portion 510 to an inner side of the cap plate 300, that is, an inner space of the case 100. The first gasket extension 520 may face the first plate surface 310 of the cap plate 300.

The first gasket extension 520 according to the present embodiment may extend from a lower end of the gasket body portion 510 in a direction parallel to the first plate surface 310. The first gasket extension 520 may come into close contact with the first plate surface 310. An end of the first gasket extension 520 may be inserted into the plate groove portion 330.

The second gasket extension 530 may extend from the gasket body portion 510 to an outer side of the cap plate 300. The second gasket extension 530 may face the plate protrusion 340 of the cap plate 300. The second gasket extension 530 may come into close contact with a side surface of the plate protrusion 340.

The third gasket extension 540 may extend from the second gasket extension 530 to the outer side of the cap plate 300. The third gasket extension 540 may extend from the second gasket extension 530 in the first direction.

The third gasket extension 540 may face the second terminal portion 420. The third gasket extension 540 may come into close contact with the third terminal surface 423 of the second terminal portion 420. The third gasket extension 540 may be spaced a predetermined distance from the plate protrusion 340 and may not come into contact with the plate protrusion 340.

A separation distance S (see FIG. 6) between the welded portion 300a and the third gasket extension 540 according to the present embodiment may be formed larger than a thickness of the terminal 400. The separation distance S between the welded portion 300a and the third gasket extension 540 may range from 2.5 mm to 4 mm. When the separation distance S between the welded portion 300a and the third gasket extension 540 is less than 2.5 mm, the third gasket extension 540 may be damaged due to welding heat during welding of the cap plate 300 to the case 100.

A ratio of the separation distance S between the welded portion 300a and the third gasket extension 540 relative to a width of the cap plate 300 according to the present embodiment may range from 8.9 to 16.1. A width W3 of the third gasket extension may range from 0.7 mm to 0.9 mm.

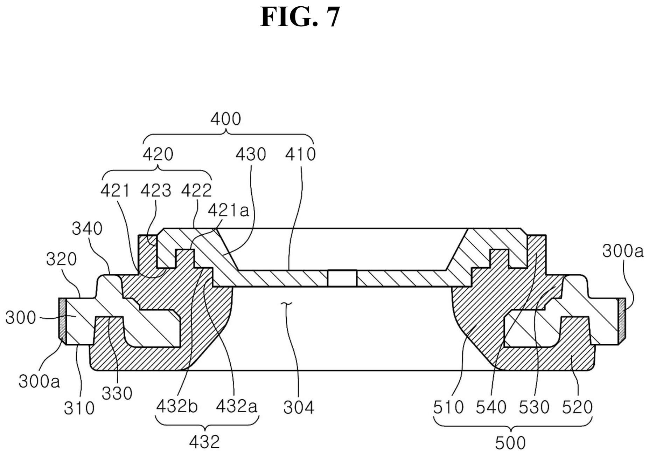

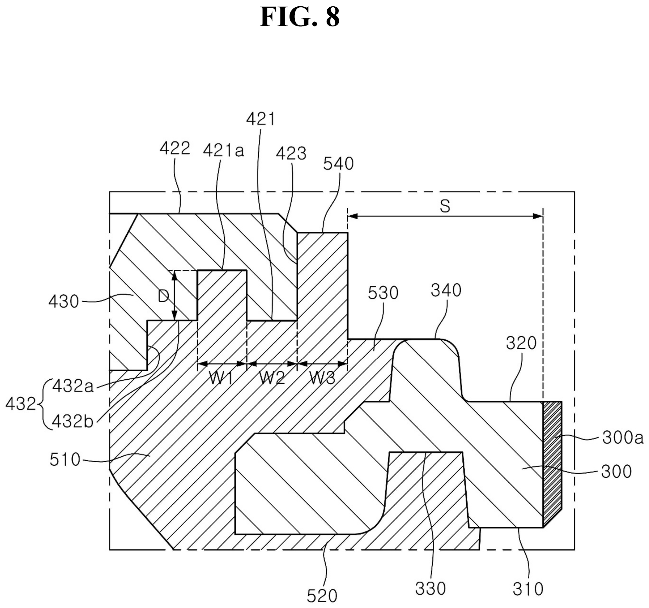

FIG. 7 is a partial cross-sectional view schematically illustrating a configuration of a secondary battery according to another embodiment of the present disclosure, and FIG. 8 is an enlarged view of FIG. 7.

Referring to FIGS. 7 and 8, a secondary battery 20 according to another embodiment of the present disclosure may include a case 100, an electrode assembly 200, a cap plate 300, a terminal 400, and a gasket 500.

In describing the secondary battery 20 according to another embodiment of the present disclosure, another embodiment of the terminal 400 that has not been described above in relation to the secondary battery 20 according to one or more embodiments of the present disclosure will be described.

The description of the secondary battery 20 according to one or more embodiments of the present disclosure may identically apply to the other components of the secondary battery 20 according to another embodiment of the present disclosure.

The terminal 400 may include a first terminal portion 410, a second terminal portion 420, and a connecting portion 430.

A stepped surface 432 may be provided on the connecting portion 430 according to the present embodiment. The stepped surface 432 may be formed to be stepped on an outer side surface of the connecting portion 430 that comes into contact with the gasket 500.

The stepped surface 432 according to the present embodiment may include a first stepped surface 432a and a second stepped surface 432b.

The first stepped surface 432a may be connected to the first terminal portion 410. The first stepped surface 432a may be formed on an outer side surface of the first terminal portion 410 in the first direction. The first stepped surface 432a may face the plate protrusion 340 of the cap plate 300.

The second stepped surface 432b may be connected to the second terminal portion 420 and may intersect the first stepped surface 432a. The second stepped surface 432b may face the electrode assembly 200. The second stepped surface 432b may be connected to the terminal groove portion 421a.

By the configuration of the stepped surface 432 formed to be stepped on the connecting portion 430, a contact area with the gasket 500 can be increased, and thus a bonding strength of the gasket 500 during injection molding of the gasket 500 can be improved. In addition, during the injection molding of the gasket 500, the stepped surface 432 may guide introduction of resin so that resin is introduced into the terminal groove portion 421a.

A secondary battery manufacturing method according to one or more embodiments of the present disclosure will be described below.

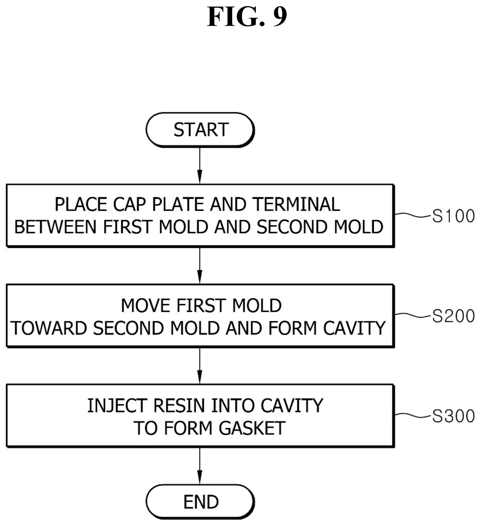

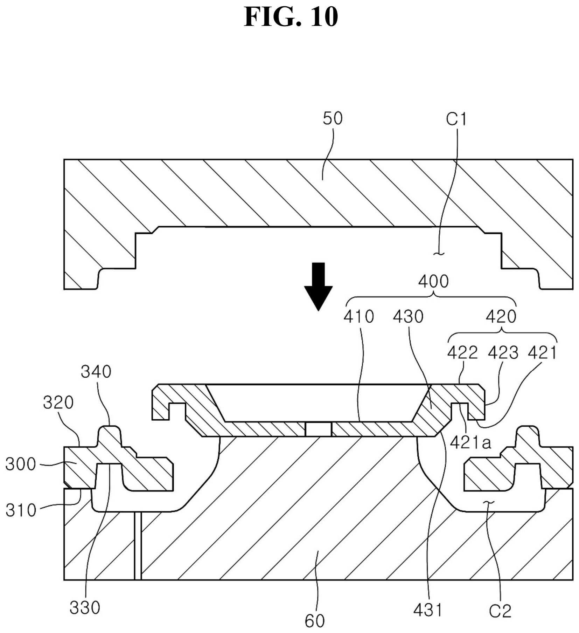

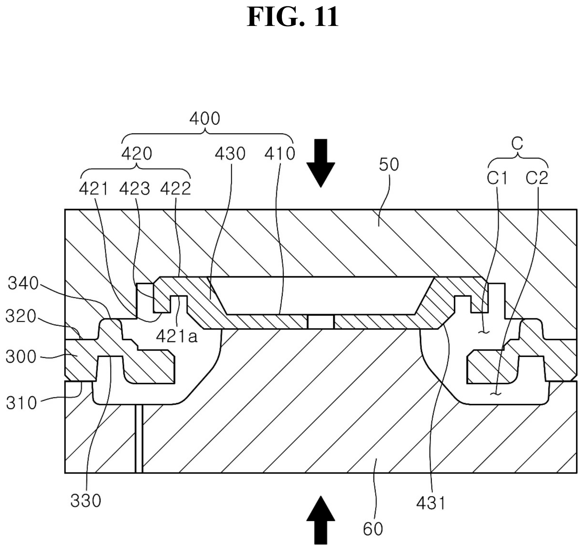

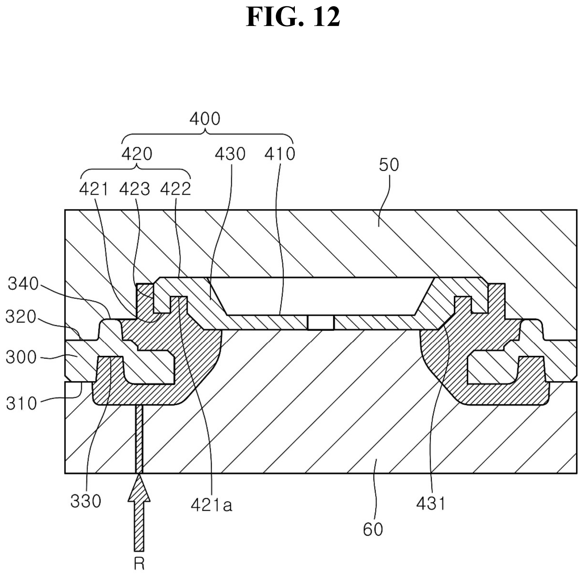

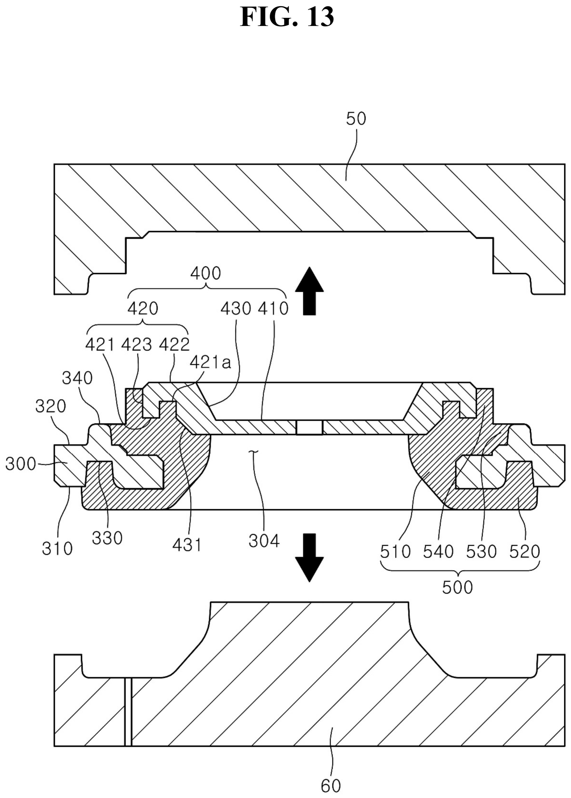

FIG. 9 is a flowchart schematically illustrating a secondary battery manufacturing method according to one or more embodiments of the present disclosure, and FIGS. 10 to 13 are views schematically illustrating a secondary battery manufacturing process according to one or more embodiments of the present disclosure.

Referring to FIGS. 9 to 13, first, a cap plate 300 and a terminal 400 are placed between a first mold 50 and a second mold 60 (S100) (e.g., in the first direction).

In the present embodiment, the first mold 50 and the second mold 60 may be various types of molds generally used in an injection molding process.

A first cavity C1 formed to be concave from one surface of the first mold 50 that faces the second mold 60 may be formed in the first mold 50. A second cavity C2 formed to be concave from one surface of the second mold 60 that faces the first mold 50 may be formed in the second mold 60.

The first mold 50 and the second mold 60 may be spaced at a predetermined distance in the first direction (S100).

In S100, the cap plate 300 and the terminal 400 may be seated on the second mold 60.

The cap plate 300 and the terminal 400 may be spaced at a predetermined distance in the first direction on the second mold 60.

The first mold 50 may be moved toward the second mold 60 and a cavity C may be formed (S200).

The first mold 50 may be moved toward the second mold 60 in a direction opposite to the first direction.

As the first mold 50 is moved a predetermined distance or more toward the second mold 60 in the direction opposite to the first direction, the terminal 400 may be inserted into the first cavity C1. The shape of the cavity C (e.g., made of the first cavity C1 and the second cavity C2) may correspond to the shape of the gasket 500.

Resin R is injected into the cavity C and the gasket 500 is formed (S300).

The resin R in S300 in a liquid state may be injected into the cavity C through an injection tube formed in the first mold 50 or the second mold 60. The resin R injected into the cavity C may be hardened into a solid state and may form the gasket 500.

The above process may be sequentially performed on a pair of terminals 400, or may be simultaneously performed on the pair of terminals 400.

Then, the first mold 50 may be moved in the first direction and separated from the second mold 60, and the cap plate 300 and the terminal 400 coupled to each other by the gasket 500 may be detached from between the first mold 50 and the second mold 60.

Then, the cap plate 300 may be coupled to a case 100, and the pair of terminals 400 may each be bonded to one of a first connecting member 401 and a second connecting member 402.

According to the present disclosure, by increasing a separation distance between a gasket and a welded portion, thermal damage to the gasket that is caused by welding heat during welding between a case and a cap plate can be prevented.

According to the present disclosure, by maximizing a contact area between a terminal and a gasket, a bonding strength of the gasket during injection molding of the gasket can be increased.

However, technical effects acquirable through the present disclosure are not limited to the above-described technical effects, and other technical effects which are not mentioned will be clearly understood by those skilled in the art from the description of the disclosure described below.

Although the present disclosure has been described with reference to the embodiments shown in the drawings, these are merely examples, and it should be understood by those skill in the art that various modifications and equivalents are possible.

Accordingly, the technical scope of the present disclosure should be defined by the following claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
a case;
an electrode assembly accommodated in the case;
a cap plate welded to the case, the cap plate having a welded portion and a pair of terminals, each terminal having a polarity different from the other terminal; and
a gasket between the cap plate and each terminal,
wherein the pair of terminals includes a first terminal portion connected to the electrode assembly and a second terminal portion extending from the first terminal portion, the second terminal portion being between the welded portion and the first terminal portion.

2. The secondary battery as claimed in claim 1, wherein the second terminal portion includes:
a first terminal surface facing the cap plate;
a second terminal surface in a direction opposite to the first terminal surface;
and
a third terminal surface connecting the first terminal surface and the second terminal surface, the third terminal surface intersecting the first terminal surface and the second terminal surface.

3. The secondary battery as claimed in claim 2, wherein a terminal groove portion is recessed toward the second terminal surface to surround the gasket, the terminal groove portion being in the first terminal surface.

4. The secondary battery as claimed in claim 3, wherein a width of the first terminal surface excluding a width of the terminal groove portion ranges from 0.7 mm to 0.9 mm.

5. The secondary battery as claimed in claim 3 or claim 4, wherein a depth of the terminal groove portion ranges from 0.7 mm to 0.9 mm.

6. The secondary battery as claimed in any of claims 2 to 5, wherein:
the first terminal surface and the third terminal surface are in contact with the gasket, and
the second terminal surface is not in contact with the gasket.

7. The secondary battery as claimed in any preceding claim, wherein the pair of terminals further includes a connecting portion connecting the first terminal portion and the second terminal portion.

8. The secondary battery as claimed in claim 7, wherein an inclined surface is in contact with the gasket at a predetermined angle and is on the connecting portion.

9. The secondary battery as claimed in claim 7, wherein a stepped surface is in contact with the gasket, the stepped surface being on the connecting portion.

10. The secondary battery as claimed in claim 9, wherein the stepped surface includes:
a first stepped surface connected to the first terminal portion; and
a second stepped surface connected to the second terminal portion, the second stepped surface intersecting the first stepped surface.

11. The secondary battery as claimed in any preceding claim, wherein the cap plate includes:
a first plate surface facing the electrode assembly;
a second plate surface in a direction opposite to the first plate surface; and
a plate groove portion recessed in the first plate surface to surround the gasket.

12. The secondary battery as claimed in claim 11, wherein the cap plate further includes a plate protrusion protruding from the second plate surface, the plate protrusion having at least a portion thereof in contact with the gasket.

13. The secondary battery as claimed in claim 12, wherein the gasket includes:
a gasket body portion passing through the cap plate;
a first gasket extension extending from the gasket body portion, the first gasket extension facing the first plate surface;
a second gasket extension extending from the gasket body portion, the second gasket extension facing the plate protrusion; and
a third gasket extension extending from the second gasket extension, the third gasket extension facing the second terminal portion;
and, optionally,
(A) wherein the third gasket extension is not in contact with the plate protrusion;
and/or
(B) wherein a separation distance between the welded portion and the third gasket extension is larger than a thickness of each of the pair of terminals;
and/or
(C) wherein a separation distance between the welded portion and the third gasket extension ranges from 2.5 mm to 4 mm;
and/or
(D) wherein a ratio of a separation distance between the welded portion and the third gasket extension relative to a width of the cap plate ranges from 8.9 to 16.1;
and/or
(E) wherein a width of the third gasket extension ranges from 0.7 mm to 0.9 mm.

14. A secondary battery manufacturing method, comprising:
placing a cap plate and a pair of terminals between a first mold and a second mold;
forming a cavity by moving the first mold toward the second mold; and
forming a gasket by injecting resin into the cavity.

15. A battery module, comprising:
a housing; and
a plurality of secondary batteries, in accordance with any preceding claim, accommodated inside the housing.
